# EUROPEAN PATENT APPLICATION

(11) **EP 1 014 465 A1**
(43) Date of publication of application: **28.06.2000**
(21) Application number: 99124676.0
(22) Date of filing: 10.12.1999
(51) Int. Cl.: H01M 10/04, H01M 10/40, H01M 4/72

(54) **Lithium ion battery cell having an etched-sheet current collector**

(30) Priority: 16.12.1998 US 212990
(71) Applicant: Hughes Electronics Corporation, El Segundo, California 90245-0956 (US)
(72) Inventor: Powers, Allen R., Torrance, CA 90505 (US); Gage, Barry G., La Crescenta, CA 91214 (US)
(74) Representative: Lindner, Michael, Dipl.-Ing.

(57) **Abstract**

A lithium ion battery cell (28) has a negative electrode (32), a positive electrode (34), a separator (36) between the two electrodes (32, 34), and an electrolyte saturating the electrodes (32, 34) and separator (36) and providing a path for lithium ions to move between the negative electrode (32) and the positive electrode (34). Each electrode (32, 34) includes a respective current collector (38, 40). The current collector (38, 40) is a metallic sheet (52) which is patterned and etched to form a plurality of apertures (54) therethrough and an integral electrode connector tab (30) extending therefrom. The apertures (54) define a grid pattern (56) that serves to provide an electrical contact to the active material of the electrode.

## Description

### BACKGROUND OF THE INVENTION

This invention relates to batteries, and, more particularly, to the structure of the current collector in a lithium ion battery cell.

A typical lithium ion battery cell includes a negative electrode, a positive electrode, a separator between the negative electrode and the positive electrode, an electrolyte that saturates the separator and provides a lithium ion path between the negative electrode and the positive electrode, a negative current collector contacting the negative electrode, and a positive current collector contacting the positive electrode. The negative electrode includes a negative-electrode active material that releases lithium ions upon discharging of the battery cell and absorbs lithium ions upon charging of the battery cell. The positive electrode includes a positive-electrode active material that reacts with lithium ions upon discharging of the battery cell and releases lithium ions upon charging of the battery cell. A lithium ion battery incorporates at least two, and typically a large number, of these cells within a container,

Each current collector provides an electrical current flow path between its respective electrode and a terminal, and thence to an external circuit. The current collector is a metal that is resistant to corrosion in the electrolyte. The current collector is typically in the form of a thin sheet or an expanded metal. Each current collector in a multicell battery typically has a tab or wire bonded to the sheet collector, with leads running to the external electrode terminal.

When the battery is to be used in a spacecraft power system, the current collector is desirably as light as possible while still serving to efficiently collect current from its respective electrode. For a sheet current collector, the thickness of the sheet is made as thin as possible consistent with the required current-carrying capability and fabrication limitations.

The inventors have recognized that, for an expanded metal current collector, in theory the spacing of the metallic elements and their dimensions may be varied to optimize the current collection function while minimizing the weight of the structure. However, these and other parameters of expanded metal articles are difficult to control precisely, and therefore it has not heretofore been possible to optimize the performance of current collectors of these general designs. Additionally, expanded metal current collectors have sharp edges which may lead to electrical shorts.

There is a need for a lithium ion battery having a current collector that is light in weight and may be optimized for current collection performance. The present invention fulfills this need, and further provides related advantages.

### SUMMARY OF THE INVENTION

The present invention provides a battery cell and a method for its fabrication. The battery cell may be optimized with respect to its collector design for excellent performance and minimal weight. The approach for preparing the collector is versatile and may be readily applied to make a wide variety of geometries and scales of collector patterns. A number of the battery cells are used in a battery cell assembly, or battery.

In accordance with the invention, a battery cell assembly comprises a battery cell having a negative electrode comprising a negative-electrode active material that releases lithium ions upon discharging of the battery cell and accepts lithium ions upon charging of the battery cell, a positive electrode comprising a positive-electrode active material that accepts lithium ions upon discharging of the battery cell and releases lithium ions upon charging of the battery cell, and a separator disposed between the negative electrode and the positive electrode. The separator is electrically nonconductive to prevent contact between the negative electrode and the positive electrode but is permeable to lithium ions. An electrolyte saturates the electrodes and the separator and provides a lithium ion path between the negative electrode and the positive electrode. A negative current collector contacts the negative electrode, and a positive current collector contacts the positive electrode. At least one, and preferably both, of the negative current collector and the positive current collector comprises a sheet having a plurality of apertures therethrough, with the apertures defining a grid structure in the sheet In most cases, there are at least two battery cells of similar design that form the battery cell assembly. The battery cell or cells are placed inside a container.

The current collector is preferably formed by patterning and etching a sheet of metal, using available photoresist techniques known in the microelectronics field. The sheet of metal is covered with a photoresist, which is exposed through a mask and developed to leave the areas to be removed unprotected. These areas are etched away, leaving a precisely defined pattern of apertures in the sheet and a grid structure between the apertures. The dimensions and pattern of the apertures and grid structure may be readily established by the mask structure. The electrical connection tab may be fabricated integrally with the grid structure, so that no welds or other attachments are required. There are no burrs or unprotected edges on the current collector when prepared by this approach, reducing the likelihood of damage to the other components during assembly. Additionally, the incidence of shorting during assembly is greatly reduced.

Other features and advantages of the present invention will be apparent from the following more detailed description of the preferred embodiment, taken in conjunction with the accompanying drawings, which illustrate, by way of example, the principles of the invention. The scope of the invention is not, however, limited to this preferred embodiment.

### BRIEF DESCRIPTION OF THE DRAWINGS

Figure 1 is a perspective view of a preferred form of a battery made according to the present invention;
Figure 2 is a perspective partially exploded view of the battery of Figure 1, with a portion of the wall of the container cut away;
Figures 3A-3C are three views of the battery stack of Figure 2, wherein Figure 3A is a perspective exploded view, Figure 3B is an end elevational view, and Figure 3C is a schematic exploded side elevational view illustrating the structure of the elements of the battery stack;
Figure 4 is a plan view of a current collector according to the invention; and
Figure 5 is a block flow diagram of an approach for fabricating the battery of Figure 1.

### DETAILED DESCRIPTION OF THE INVENTION

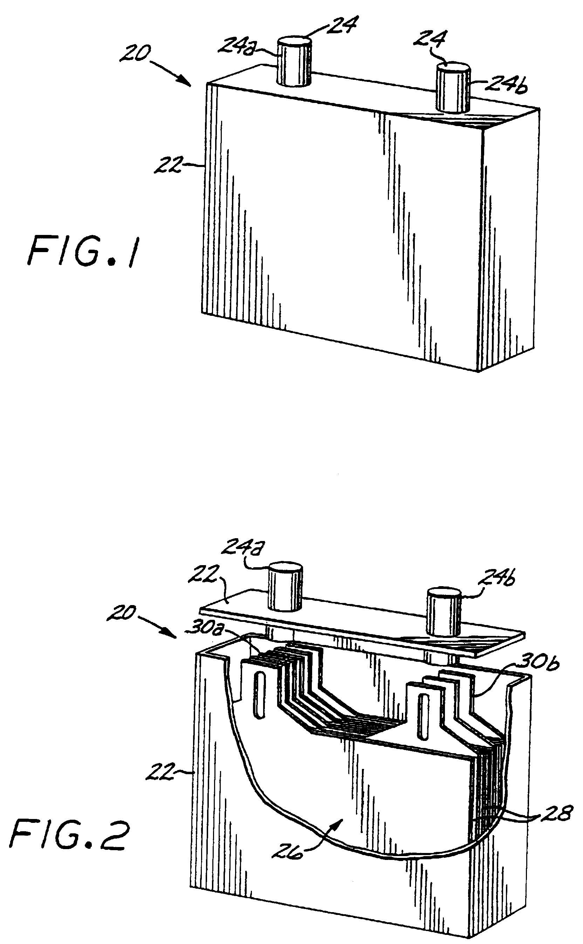

A battery cell assembly 20 according to the present invention is illustrated in Figure 1. The battery cell assembly 20 includes a container 22 that is hermetically sealed against leakage of the contents of the container and against intrusion of external elements. External terminals 24, including a positive terminal 24a and a negative terminal 24b, extend through one face of the container 22 to provide external connections.

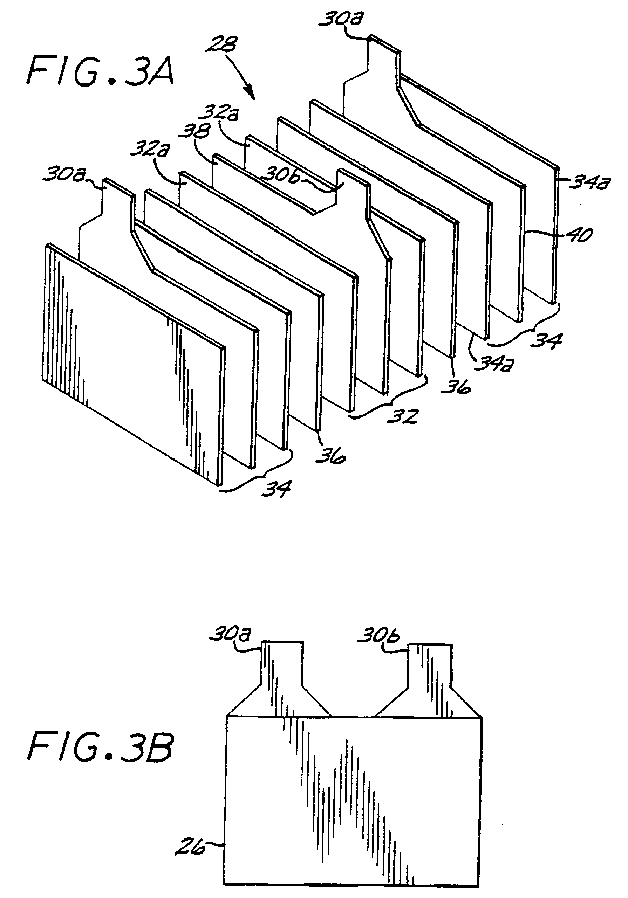

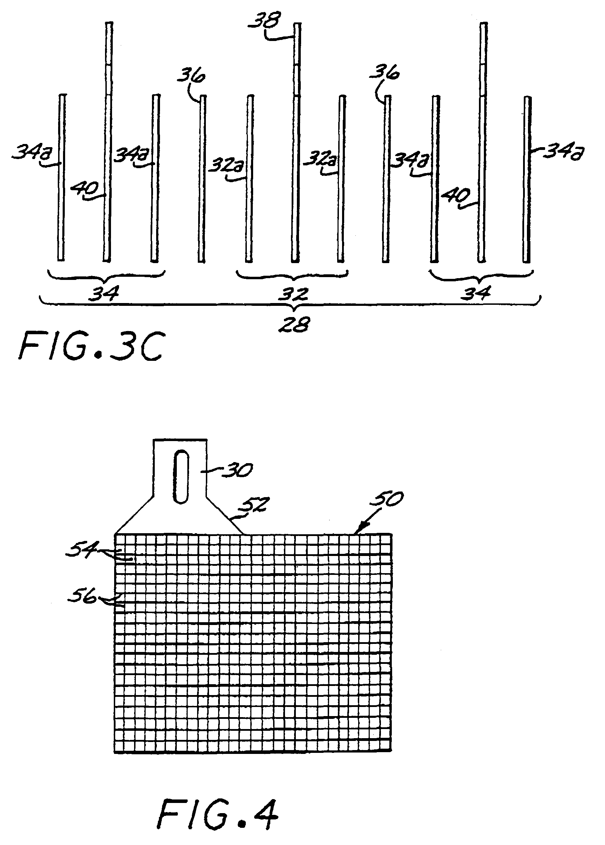

A plate stack 26 inside the container 22 is shown in Figure 2, and the components and arrangement of the plate stack 26 are illustrated in Figure 3. The plate stack 26 includes a plurality of individual battery cells 28, with individual electrode connector tabs 30 extending from the cells 28. The electrode connector tabs 30 include a set of positive electrode connector tabs 30a and a set of negative electrode connector tabs 30b. The positive electrode connector tabs 30a are in electrical communication with the positive terminal 24a, and the negative electrode connector tabs 30b are in electrical communication with the negative terminal 24b.

Each battery cell 28 includes a negative electrode 32, a positive electrode 34 (and preferably two positive electrodes 34, as illustrated), and a separator 36 disposed between and contacting the negative electrode 32 and the positive electrode 34. The negative electrode 32 includes a negative current collector 38 and a layer of negative-electrode active material 32a supported on each side thereof. The negative electrode active material 32a releases lithium ions upon discharging of the battery cell and accepts lithium ions upon charging of the battery cell. The positive electrode 34 includes a positive current collector 40 and a layer of positive-electrode active material 34a supported on each side thereof. The positive electrode active material 34a accepts lithium ions upon discharging of the battery cell and releases lithium ions upon charging of the battery cell. The separator 36 is electrically nonconductive to prevent contact between the negative electrode and the positive electrode but is permeable to lithium ions. An electrolyte saturates the electrodes 32 and 34, and the separator 36, and provides a lithium ion path between the negative electrode 32 and the positive electrode 34.

The negative current collector 38 and its negative electrode active material 32a, the positive current collector 40 and its positive electrode active material 34a, the separator 36, and the electrolyte may be made of any operable materials and have any operable physical arrangement. A wide variety of operable materials and physical arrangements are known in the art. The preferred approach of the present inventors for these elements is that developed by Bell Communications Research (Bellcore), and described, for example, in US Patents 5,470,357, 5,456,000, and 5,429,891, whose disclosures are incorporated by reference. The presently most preferred dimensions and materials of construction of these elements are a 0.012 inch thick negative electrode 32 made of a copper negative current collector 38 with a thin film on each side thereof of carbon negative electrode active material 32a; a 0.008 inch thick positive electrode 34 made of an aluminum positive current collector 40 with a thin film on each side thereof of LiCoO₂ positive electrode active material 34a; a 0.002 inch thick separator 36 made of a hybrid polymer that is electrically nonconducting but is porous to the electrolyte, preferably polyvinylidene fluoride; and an electrolyte of 1 molar LiPF₆ in a 2:1 mixture by volume of ethylene carbonate and dimethyl carbonate. These dimensions and materials of construction are presented by way of illustration of the preferred embodiment and are not limiting of the invention, which is applicable to other cells as well.

Electrical current is carried to and from the negative electrode 32 of each battery cell 28 through the negative electrode connector tab 30b. Electrical current is carried to and from the positive electrode 34 of each battery cell 28 through the positive electrode connector tab 30a. In the approach of the present invention, the negative electrode connector tab 30b extends upwardly from and is integral with the negative current collector 38, and the positive electrode connector tab 30a extends upwardly from and is integral with the positive current collector 40.

Either the negative current collector 38, the positive current collector 40, or, preferably, both current collectors 38 and 40 are made by a pattern-and-etch approach to be described subsequently. Such a patterned-and-etched current collector 50 is illustrated in general form in Figure 4. The current collector 50 comprises a sheet 52 having a plurality of apertures 54 therethrough. The apertures 54 define a grid structure with grid lines 56 in the sheet 52. The grid lines 56 define the shapes of the apertures 54 which may be square (as illustrated), rectangular, or any other two-dimensional shape such as triangles, hexagons, etc. The terminal connector 30 is patterned-and-etched from the starting sheet 52, and is therefore integral with the remainder of the structure of the current collector 50.

In the presently preferred embodiment, the negative current collector 38 is made of copper sheet about 0.002 inch thick, with square aperture dimensions of about 0.035 inches by about 0.035 inches, and a grid line width of about 0.005 inches. The positive current collector 40 is made of aluminum sheet about 0.003 inches thick, with square aperture dimensions of about 0.032 inches by about 0.032 inches, and a grid line width of about 0.008 inches. However, an important advantage of the present invention and fabrication approach is that the material of construction of the current collectors, and the sizes, spacings, and arrangement of the apertures and grid lines may be readily established at optimized values for each particular application.

The present approach is to be contrasted with the conventional approach wherein the current collector is a solid sheet, and the terminal connector 30 is attached by welding, brazing, soldering, or the like. The present approach reduces the electrical resistance, thermal impedance, and cost of producing the current collector.

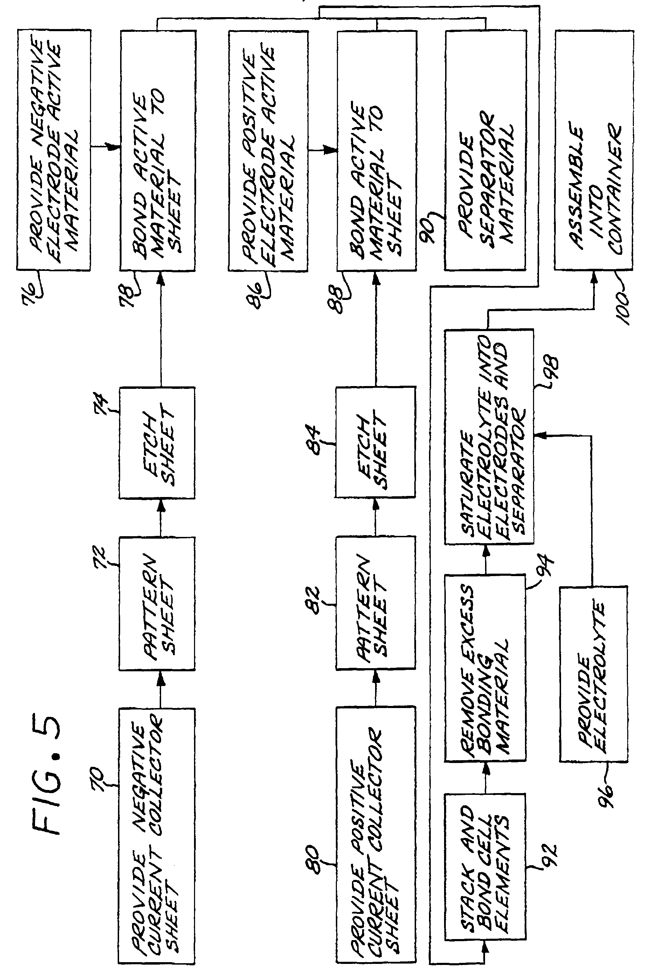

Figure 5 illustrates a preferred approach to the preparation of the battery cell assembly 20, according to the present invention.

The negative current collector 38 and integral negative electrode connector tab 30b are prepared A sheet of the negative current collector material is provided, numeral 70. The negative current collector sheet is patterned, numeral 72, by coating the sheet on both sides with a photoresist material, exposing the photoresist material trough a mask which defines the pattern of apertures and grid lines and the negative electrode connector tab 30b, developing the photoresist material, and washing away the unexposed photoresist material. The apertures are then opened through the sheet by etching the portions of the sheet exposed through the areas of removed photoresist, numeral 74, resulting in the negative current collector 38 with integral tab 30b. The etchant is selected according to the material of the negative current collector sheet, using any of the operable etchants well known in the industry. Negative electrode active material 32a is provided, numeral 76. The negative electrode active material 32a is bonded to the patterned-and-etched negative current collector 38 using any operable approach, producing the negative electrode 32. Preferably, the bonding is accomplished by the same polymeric resin as used in the separator 36, with the bonding accomplished by heating the subassembly to a temperature of about 266°C to polymerize the resin.

The positive current collector 40 and integral positive electrode connector tab 30a are prepared. A sheet of the positive current collector material is provided, numeral 80. The positive current collector sheet is patterned, numeral 82, by coating the sheet on both sides with a photoresist material, exposing the photoresist material through a mask which defines the pattern of apertures and grid lines and the positive electrode connector tab 30a, developing the photoresist material, and washing away the unexposed photoresist material. The apertures are then opened through the sheet by etching the portions of the sheet exposed through the areas of removed photoresist, numeral 84, resulting in the positive current collector 40 with integral tab 30a The etchant is selected according to the material of the positive current collector sheet, using any of the operable etchants well known in the industry. Positive electrode active material 34a is provided, numeral 86. The positive electrode active material 34a is bonded to the patterned-and-etched positive current collector 40 using any operable approach, producing the positive electrode 34. Preferably, the bonding is accomplished by the same polymeric resin as used in the separator 36, with the bonding accomplished by heating the subassembly to a temperature of about 266°C to polymerize the resin.

Sheets of the separator material 36 are provided, numeral 90.

The appropriate numbers of the negative electrode 32, the positive electrode 34, and the separator 36 are stacked together to form the battery cell 28 and bonded, numeral 92. Preferably, the bonding is accomplished using an excess of the polymeric resin of the separator, with the bonding accomplished by heating the stack to a temperature of about 266°C to polymerize the resin. The arrangement of the elements is preferably as illustrated in Figures 3A-3C, but other operable arrangements may be used. Excess bonding material is thereafter removed, numeral 94.

The electrolyte is provided, numeral 96, and saturated into the electrodes 32 and 34, and the separator 36, numeral 98. The structure is placed into the container 22, the terminals 24 are provided and contacted to the respective electrode connector tabs 30, and the container is sealed, numeral 100, completing the fabrication of the battery cell assembly 20.

Large-capacity battery cells have been manufactured using the approach of the invention, with electrodes 32 and 34 each about 4 inches by 6 inches in size. These cells have performed well in initial characterization and life-cycle testing.

To sum up, the present invention relates to a lithium ion battery cell having a negative electrode, a positive electrode, a separator between the two electrodes, and an electrolyte saturating the electrodes and separator and providing a path for lithium ions to move between the negative electrode and the positive electrode. Each electrode includes a respective current collector. The current collector is a metallic sheet which is patterned and etched to form a plurality of apertures therethrough and an integral electrode connector tab extending therefrom. The apertures define a grid pattern that serves to provide an electrical contact to the active material of the electrode.

Although a particular embodiment of the invention has been described in detail for purposes of illustration, various modifications and enhancements may be made without departing from the spirit and scope of the invention. Accordingly, the invention is not to be limited except as by the appended claims.

## Claims

1. A battery cell assembly, comprising a battery cell (28) having:
a negative electrode (32) comprising
a negative-electrode active material that releases lithium ions upon discharging of the battery cell and accepts lithium ions upon charging of the battery cell, and
a negative current collector (38) contacting the negative electrode active material;
a positive electrode (34) comprising
a positive-electrode active material that accepts lithium ions upon discharging of the battery cell and releases lithium ions upon charging of the battery cell, and
a positive current collector (40) contacting the positive electrode active material;
a separator (36) disposed between the negative electrode (32) and the positive electrode (34), the separator (36) being electrically nonconductive to prevent contact between the negative electrode (32) and the positive electrode (34) but being permeable to lithium ions; and
an electrolyte saturating the electrodes and the separator and providing a lithium ion path between the negative electrode (32) and the positive electrode (34),
characterized in that at least one of the negative current collector (38) and the positive current collector (40) comprises a sheet (52) having a plurality of apertures (54) therethrough, the apertures defining a grid structure in the sheet.

2. The battery cell assembly of claim 1, characterized in that the at least one of the negative current collector (38) and the positive current collector (40) further comprises an electrode connector tab (30) extending from a side of the sheet and being integral with the sheet.

3. The battery cell assembly of claim 1 or 2, characterized in that
the negative current collector (38) comprises a negative-collector sheet (52) having a plurality of apertures (54) therethrough, the apertures (54) defining a grid structure in the negative-collector sheet, and
the positive current collector (40) comprises a positive-collector sheet (52) having a plurality of apertures (54) therethrough, the apertures (54) defining a grid structure in the positive-collector sheet.

4. The battery cell assembly of any of claims 1 through 3, characterized in that each sheet of the current collectors (38, 40) comprises a metal selected from the group consisting of aluminum and copper, and alloys thereof.

5. The battery cell assembly of any of claims 1 through 4, characterized by at least two of said battery cells (28).

6. The battery cell assembly of any of claims 1 through 5, characterized by a container (22) in which the battery cell (28) is disposed.

7. A method for preparing a battery cell assembly having at least one battery cell, comprising the steps of
preparing current collectors including a negative current collector (38) and a positive current collector (40), at least one of the negative current collector and the positive current collector comprising a sheet (52) having a plurality of apertures (54) therethrough, the apertures defining a grid structure in the sheet;
providing a negative electrode active material that releases lithium ions upon discharging of the battery cell and accepts lithium ions upon charging of the battery cell;
contacting the negative electrode active material to the negative current collector, forming a negative electrode (32);
providing a positive-electrode active material that accepts lithium ions upon discharging of the battery cell and releases lithium ions upon charging of the battery cell;
contacting the positive electrode active material to the positive current collector (40), forming a positive electrode (34);
positioning a separator (36) between the negative electrode (32) and the positive electrode (34), the separator (36) being electrically nonconductive to prevent contact between the negative electrode and the positive electrode but being permeable to lithium ions; and
saturating the electrodes and the separator with an electrolyte, the electrolyte providing a lithium ion path between the negative electrode and the positive electrode.

8. The method of claim 7, characterized in that the step of preparing current collectors includes the steps of
providing a sheet (52) of an electrically conductive material, and
forming the plurality of apertures (54) through the sheet.

9. The method of claim 7, characterized in that the step of preparing current collectors includes the steps of
providing a sheet (52) of an electrically conductive material, and
forming the plurality of apertures (54) through the sheet and an electrode connector tab (30) extending from a side of the sheet, the electrode connector tab (30) being integral with the sheet.

10. The method of claim 8 or 9, characterized in that the step of forming includes the step of patterning and etching the sheet (52).
